# EUROPEAN PATENT APPLICATION

(11) **EP 0 713 905 A1**
(43) Date of publication of application: **29.05.1996**
(21) Application number: 95500093.0
(22) Date of filing: 29.06.1995
(51) Int. Cl.: C09D 7/14

(54) **Method for the incorporation of additives in ground paint**

(30) Priority: 26.07.1994 ES 9401642
(71) Applicant: MINERALS GIRONA, S.A., E-17600 Figueres (Girona) (ES)
(72) Inventor: Conesa Compte, August c/o Minerals Girona, S.A., ES-17600 Figueres (Girona) (ES); Suner Gratacos, Perez c/o Minerals Girona, S.A., ES-17600 Figueres (Girona) (ES)
(74) Representative: Perez Bonal, Bernardo

(57) **Abstract**

A method for the incorporation of additives in ground paint is disclosed. The method comprises grinding of mineral filler or pigment. During the grinding step further additives are injected in order to achieve coating of the filler particles. Coated particles are then subsequently added to paint paste during extrusion.

## Description

The object of the present invention, in such a way in the statement of this specification is stated, consist of a METHOD FOR THE ATTACHMENT OF ADDITIVES IN GROUND PAINT.

At present, two class of paint well differentiated may be distinguished, liquid paint and ground paint.

Most of liquid paint contain 50% of solvents which during the drying are evaporated, causing a enviroment contamination and increasing the paint cost.

Ground paint, also called electrostatics, allow save materials and time and reduce considerably the investment, since these are free of solvents.

On applying of the ground paint the property of attraction among electrostatically charged particles is used. For it, a direct current of about 100.000 V is applied to metal wire grid, with the paint spraying throught it, so that charge each particle; the objects which must to receive the paint are connected to the opposite terminal of high voltage circuit, so as to they attract the paint particles.

The actual problem of ground paint lies in the difficulty to attach liquid additives obtaining homogeneous mixtures, because of de amount of liquid additive to attach is minimun when is compared with the solid material constituent of paint, being practically impossible to obtain a final homogeneous mixture.

Various products attaching new components in ground paint is marketing, for example silica and feldspar, however its results are not fully satisfactory, since they alter and modify the final propierties thereof. The problem lies in that the used compounds as vehicle for the additives applying, are not inerts and therefore interacting with paint, modifying its characterictics; on the other hand, since they are non volatile compounds, they can not be remove either, like happens in liquid additives, therefore, the alterations causing in paint are permanent.

The novel method, essentially consist of the coating of mineral filler, or inert pigment particles with additives so that during the masterization or extrusion method of paint, this mineral filler or inert pigment release homogeneously the additives in the paint, with a maximun yield achieving of that in the paint.

More appropiate mineral filler or inert pigment used as vehicle for the attachment of additives in ground paint, according with the present process are:
- Barium sulfate.
- Talc.
- Titanium dioxide.
- Mixture in different ratios of the above mentioned components.

Mainly, the additives used for coating the mineral filler or pigment are:
- Brightening additive
- Grading additive
- Pigment dispersion additive
- Tribo additive
- Degassing additive
- Saddening down additive
- Etc.

There must be take into account that there are a great variety of each one of the mentioned additives, which are different by the marketing company themselves, as well as by the chemical composition thereof, all of them may be used however.

The novel method is started with the grinding of mineral fillers or inert pigments in any suitable device, hammer mill, ball crusher, pendular, micronizer, jets, etc.

During the grinding step, various additives are inyected in the machines grinding chamber through metering pump in stablished rates depending upon the additive class and the expected final result.

As the grinding progress, the injected additives are coating the mineral or inert pigment particles, finally being achieving reduce that to a extremely fine ground, whose particles are homogeneously coating by the various additives.

This ground is subsequent attached to the ground paint components in the time of masterization and extrusion, where it is mixing with said components, releasing then the additives containing homogeneously into the soft product that will be the ground paint.

After the paint paste extrusion, the elaboration method of the ground paint goes on as usual, the extruded spindle band is rolled and, before the complete drying thereof is soured until it micronize to a ground of desired grammage, which contain the additives.

In order to ilustrate all explained above, the present specification is attached, being a drawing sheet integral part thereof, wherein a flowchart corresponding to the preparation of a type-system TGIC ground paint, according to the method claimed, wherein a brightening additive and grading additive is attached.

### DESCRIPTION OF A PRACTICAL CASE

According to the present example of novel METHOD FOR THE ATTACHMENT OF ADDITIVES IN GROUND PAINT, for the manufacturing of type TGIC ground paint (for outside), a determinated amount of barium sulfate (1) is started, which is introduced in a hammer mill (2) so as to obtain the micronizing thereof until a granulometry of 0,8 micron. During the barium sulfate micronizing, a 0,5% by weight of brightening additive (4) is put into the grinding chamber of mill, through a metering pump (3), and with a second metering pump (5) a 5% by weight of grading additive (6). Inside of the grinding chamber a size reduction and mixing of additives and barium sulfate is made, the object of which is that particles of barium sulfate are coating by additives, finally resulting in a fine ground of barium sulfate with the additives homogeneously blended (7).

Subsequent, the masterization step and paint extrusion (8) is started, in order which the different components of ground paint (9) are poured in the masterization and extrusion chamber:
- Polyester for TGIC (93/7) 1077.2% by weight
- Araldite PT-810 81.4% by weight
- TiO₂ 499.7% by weight
- Barite Extraflor 15 75.8% by weight
- Benzoine 11.1% by weight

with the poured being in this turn the barium sulfate powder previously achieved (7) and which are referred to the ratios of the other components forming the paint.

This barium sulfate powder is homogeneously mixing with the other paint components, at which time the additives coating barium sulfate is released, at which they are homogeneously distributed on the paint.

The powder barium sulfate remaining, since it is inert, do not react in any case with the other components, neither altering the cualitative characterictics of paint.

After mixture extrusion, a spindle band of paint paste (10) which is laminated (11) before it getting hard, and finally the obtaining film (12) are micronize in a hammer mill (13), achieving the final product, type-TGIC ground paint with brightening and grading additives (14).

Since there has been made the description referred to which is the previous specification, it is essential to insist that the realization details of the explained idea may be changed with little modifications, depending upon the essential principles of idea, which are, in essence showed in paragraph of the above description.

Once stablished the explained concept, subsequiently the claims is written, synthesizing in this way the novel that is wanted to claim.

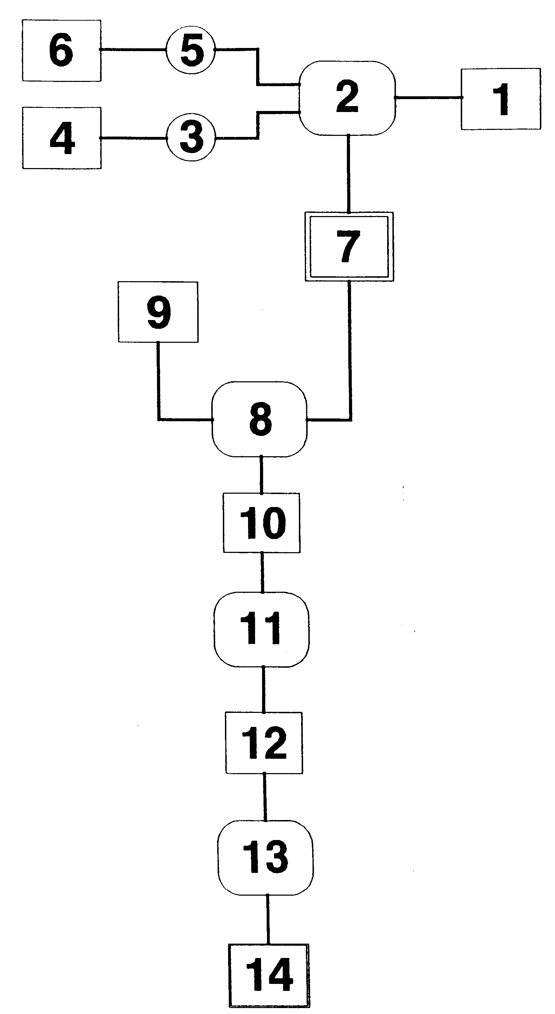

## Claims

1. "METHOD FOR THE ATTACHMENT OF ADDITIVES IN GROUND PAINT" essentially characterized in that, at first, grinding of mineral filler or inert pigment is made in any suitable device, hammer mill, balls crusher, pendular, opposite jet, micronizer, jets, etc., being injected during the grinding step, various additives to be attachment in the ground paint, directly in the machines grinding chamber through metering pump in stablished rates depending upon the additive class and the expected final result, in order that, as the grinding progress, the injected additives are coating the mineral or inert pigment particles, finally being achieving reduce that to a extremely fine ground, whose particles are homogeneously coating by the various additives, this ground is subsequent attached to the ground paint components in the time of masterization and extrusion, where it is mixing with said components, releasing then the additives containing homogeneously into the soft product that will be the ground paint, and following the paint paste extrusion, the manufacturing method of the ground paint goes on as usual, the extruded spindle band is rolled and, before its complete drying is soured until it is reduced to a ground of desired grammage, which contain starting additives homogeneously.
The whole of that, in such a way is expresed in the presente specification composed of 6 pages respectively numbered, typed on one side and one and half space and two more of drawings.
